## Europäisches Patentamt
## European Patent Office
## Office européen des brevets

(19)

(11) Veröffentlichungsnummer: **0 445 289 A1**

(12) **EUROPÄISCHE PATENTANMELDUNG**
veröffentlicht nach Art. 158 Abs. 3
EPÜ

(21) Anmeldenummer: 89907381.1

(22) Anmeldetag: 25.04.89

(86) Internationale Anmeldenummer:
PCT/SU89/00112

(87) Internationale Veröffentlichungsnummer:
WO 90/05120 (17.05.90 90/11)

(51) Int. Cl.⁵: **C04B 35/20**, C04B 35/12

(30) Priorität: 31.10.88 SU 4496508

(43) Veröffentlichungstag der Anmeldung:
11.09.91 Patentblatt 91/37

(84) Benannte Vertragsstaaten:
**AT BE CH DE FR GB IT LI NL SE**

(71) Anmelder: **INSTITUT STRUKTURNOI MAKROKINETIKI AKADEMII NAUK SSSR**
**Moskovskaya oblast**
**Poselok Chernogolovka 142432(SU)**

Anmelder: **KAZAKHSKY MEZHOTRASLEVOI NAUCHNO-TEKHNICHESKY TSENTR SVS**
**ul. Kirova, 172**
**Alma-Ata, 480012(SU)**

(72) Erfinder: **MERZHANOV, Alexandr Grigorievich**
**ul. Tretya, 3-2 Moskovskaya obl.**

pos. Chernogolovka, 142432(SU)
Erfinder: **XANDOPULO, Georgy Ivanovich**
**ul. Mira, 168-34**
**Alma-Ata, 480035(SU)**
Erfinder: **NERSESIAN, Mikael Davidovich**
**Institutsky pr., 4-120 Moskovskaya obl.**
**pos. Chernogolovka, 142432(SU)**
Erfinder: **ISMAILOV, Marat Bazaraly-uly**
**8 mikroraion, 26-52**
**Alma-Ata, 480035(SU)**
Erfinder: **BOROVINSKAYA, Inna Petrovna**
**ul. Tretya, 3-2 Moskovskaya obl.**
**pos. Chernogolovka, 142432(SU)**

(74) Vertreter: **Lehn, Werner, Dipl.-Ing. et al**
**Hoffmann, Eitle & Partner Patentanwälte**
**Arabellastrasse 4**
**W-8000 München 81(DE)**

(54) **VERFAHREN ZUR HERSTELLUNG VON CHROM ENTHALTENDEN FEUERFESTEN MATERIALIEN.**

(57) Die Erfindung bezieht sich auf das Gebiet der Herstellung eines chromhaltigen Feuerfeststoffes und besteht in einer lokalen Initiierung einer exothermischen Reaktion in der Mischung folgender Zusammensetzung: chromhaltige Komponente, 8-20 Ma.-% Reduktionsmittel, das eines der Metalle: Aluminium, Magnesium, Silizium, Titan, Zirkonium oder deren Legierungen darstellt, und 0,1-50 Ma.-% Füllstoff, als welchen man einzeln oder im Gemisch genommene Periklas, Sand, Ton, feuerfestes Oxid, feuerfesten Bruch, Abfälle der Hochofenproduktion, Abfälle der Graphitproduktion, Abfälle der Siliziumkarbidproduktion, Salz anorganischer Säure benutzt.

EP 0 445 289 A1

Technisches Gebiet

Die vorliegende Erfindung bezieht sich auf ein Verfahren zur Herstellung eines chromhaltigen Feuerfeststoffes.

Der Erfindung liegt die Aufgabe zugrunde, ein Verfahren zur Herstellung eines crimgaltigen Feuerfeststoffes durch qualitative Änderung der Zusammensetzung der Mischung und der Verhältnisse der Wärmebehandlung zu entwickeln, das es ermöglichte, bei einer einfachen Technologie und bei einer Herabsetzung des Energieaufwandes die physikalisch-mechanischen Kennwerte des genannten Stoffes bedeutend zu verbessern.

Zugrundeliegender Stand der Technik

Bekannt ist ein Verfahren zur Herstellung von feuerfesten Erzeugnissen aus einem chromhaltigen Material (SU, A, 678042), das die Vermischung von Chromeisenerz, feingemahlenem Sintermagnesit und einem Bindemittel, zum Beispiel von Lignosulfonat, das Brennen der hergestellten Mischung bei einer Temperatur von 1600-1700°C, die Zerstreuung des Sintermaterials in Fraktionen, die Bereitung eines Gemenges aus 60 Ma.-% Sinterchrommagnesitgut und 40 Ma.-% Sintermagnesitpulver, die Formung eines Halbzeuges aus diesem Gemenge und dessen Brennen bei einer Temperatur von 1700-1800°C vorsieht. Das Vermischen der Komponenten erfolgt durch eine mehrmalige aufeinanderfolgende portionsweise Einführung des Bindemittels und dispersen Sintermagnesits in das körnige Chromeisenerz, wobei der Gehalt jeder Portion an Komponenten 10-25% des erforderlichen beträgt.

Bekannt ist ein Verfahren zur Herstellung eines chromhaltigen Feuerfeststoffes in der Form eines Erzeugnisses (US, A, 4169734), das die Bereitung eines Gemenges aus fraktionierten Magnesitpulver and Chromeisenerz beim Massenverhältnis 30-90 : 10-70 in Gegenwart von 0,5-1,5 Ma.-% Bindemittel, das aus der Reihe: $MgCl_2$, $MgSO_4$ $Ca(NO_3)_2$ gewählt ist, oder ohne Bindemittel; die Formung aus dem bereiteten Gemenge eines Halbzeuges in Gegenwart von Wasser unter einem hohen Druck; das Brennen desselben bis zum Erhalten eines Erzeugnisses bei einer Temperatur von 1700-1800°C vorsieht.

Bekannt ist ein Verfahren zur Herstellung eines chromhaltigen Feuerfeststoffes (GB, A, 1510949) in der Art eines Erzeugnisses, das de Bereitung eines Gemenges aus 26-56 Ma.-% chromhaltiger Komponente, beispielsweise Chromit, das vorher in Fraktionen von 0,5-5 mm (10-40 Ma.-%) und bis 0,1 mm (60-90 Ma.-%) zerlegt ist, dabei soll der Anteil der Teilchen von

$\leq$ 0,06 mm Grösse mindestens 70% der Chromitmasse in diesem Gemenge beträgen, und gebranntem Magnesit (MgO), das vorher bis auf die Grösse von Teilchen

< 0,1 mm bei einem Gehalt an Teilchen von $\leq$ 0,06 mm Grösse von 70% von dessen Masse zerkleinert ist; die Formung eines Halbzeuges aus dem Gemenge mit deren anschliessender Wärmebehandlung bei einer Temperatur von 1700-1900°C während 4 Stunden bis zur Erhaltung eines Erzeugnisses, beispielsweise von Ziegeln, vorsieht.

Die beschriebenen Verfahren sind mehrstufig, kennzeichnen sich durch einen hohen Energieaufwand und einen langwierigen Prozess. Die Feuerfestigkeit der erhaltenen Stoffe übersteigt 1600°C nicht, wodurch deren Anwendungsgebiet begrenzt wird. Die physikalisch-mechanischen Kennwerte dieser Stoffe sind ihrem Inhalt nach nicht konstant und hängen in bedeutendem Masse von dem Dispersionsgrad der Ausgangskomponenten des Gemenges ab, wodurch die Güte der Erzeugnisse, die aus diesen hergestellt werden, sich beträchtlich herabsetzt.

Offenbarung der Erfindung

Die Erfindung liegt die Aufgabe zugrunde, ein Verfahren zur Herstellung eines chromhaltigen Feuerfeststoffes durch qualitative Änderung der Zusammensetzung des Gemenges und der Verhältnisse der Wärmebehandlung zu entwickeln, das ed ermöglichte, dem genannten Material bei vereinfachter Technologie und gesenktem Energieaufwand wesentlich bessere physikalisch-mechanische Charakteristiken zu verleihen.

Die Aufgabe wird durch ein Verfahren zur Herstellung eines chromhaltigen Feuerfeststoffes gelöst, das die Bereitung eines Gemenges aus einer chromhaltigen Komponente und einem Füllstoff und dessen Wärmebehandlung vorsieht, in dem man, erfindungsgemäss, als Füllstoff, der in einer Menge von 0,1-50 Ma.-% eingeführt wird, einzeln oder im Gemisch genommene Periklas, Sand, Ton, feuerfestes Oxid, feuerfesten Bruch, Abfälle der Hochofenvorgänge, Abfälle der Graphitproduktion, Abfälle der Herstellung von Siliziumkarbid, Salz einer anorganischen Säure anwendet und in das genannte Gemenge noch 8-20 Ma.-% Reduktionsmittel einführt, als welches man mindestens ein Metall, das aus der Gruppe: Aluminium, Magnesium, Silizium, Zirkonium, Titan oder deren Legierungen gewählt ist, die erhaltene exothermische Mischung einer Wärmebehandlung unter den Bedingungen der Flammenführung unterzieht.

Im Ergebnis des beschriebenen Verfahrens gewinnt man einen chromhaltigen Feuerfeststoff, der eine Feuerfestigkeit von 1700-2000°C, eine Druckfestigkeit von bis 70 MPa, eine Porigkeit von 14-56%, eine Dichte von 2,5-3,2 g/cm³ aufweist und sich durch eine Homogenität über den ganzen Rauminhalt kennzeichnet.

Das Gemenge, das nach dem erfindungsgemässen Verfahren bereitet ist, stellt eine exothermische Mischung dar, die befähigt ist, sich bei lokaler Initiierung an jeder beliebiger Stelle mittels einer elektrischen Wendel entzündet, es können auch ein elektrischer Bogen oder ein Laserbündel sein. Das erfindungsgemässe Verhältnis der Komponenten der exothermischen Mischung ist ebenso wie die Bedingungen des Brennens experimentell gewählt.

An der Stelle der Initiierung (oder Entzündung) bildet sich eine Welle der Synthese, die mit hellem Leuchten über das ganze Volumen der versichteten exothermischen Mischung sich verbreitet, indem sie diese in eine stark gesintertes Endprodukt - Feuerfeststoff - verwandelt. Die hohen Brenntemperaturen sichern die Vollständigkeit des Reagierens der Ausgangskomponenten und die Erhaltung eines über das ganze Volumen homogenen (mit einer geringen Sreuung charakteristischer Grössen) Feuerfeststoffes. Eine Abweichung des erfindungsgemässen Verhältnisses der Komponenten führt dazu, dass die Flammenfront erlischt, und eine Synthese des Endproduktes vollzieht sich nicht oder erfolgt ungleichmässig, was eine Herabsetzung der Qualität der hergestellten Materialien bzw. Erzeugnisse zur Folge hat.

Das Vorhandensein eines Reduktionsmittels in der exothermischen Mischung, als welches man die obengenannten Metalle oder ihre Legierungen in einer Menge von 8-20 Ma.-% benutzt, sichert ihre Fähigkeit, bei einer Initiierung zu brennen, was zur gleichzeitigen Oxydation des Reduktionsmittels bei Flammenführung, zum Erreichen einer raschen Wärmehomogenisierung im ganzen Volumen der Ausgangsmischung, was eine hohe Gleichartigkeit der Eigenschaften über das ganze Volumen des erhaltenen Materials zur Folge hat. Der Gehalt an Reduktionsmittel wird abhängig von den Bedingungen des Prozesses, der Natur der Ausgangskomponenten, der qualitativen Zusammensetzung des Endproduktes ausgewählt. Die Abweidchung von dem genannten Gehalt im Sinne einer Verminderung verringert die Wirksamkeit des Brennens, das Produkt wird unqualitativ. Die Vergrösserung des Gehaltes an Reduktionsmittel führt zu einem intensiven Brennen, einem Auswurf der Komponenten, stört die Stöchiometrie der Ausgangskomponenten und die Güte des Endproduktes infolge der Abschmelzung und Veränderung der Homogenität der Zusammensetzung. Es ist empfehlenswert, als Reduktionsmittel ein Gemisch aus mindestens zwei genannten Metallen anzuwenden, die im Äquiatomverhältnis genommen sind, und als genannte Legierung eine Aluminiumlegierung zu benutzen, die aus der Reihe: $Al_3Mg_2$, $Al_3Mg_4$, $AlMg$, $Al_2Mg_3$, $TiAl$ ausgewählt ist. Der Brennprozess wird in diesem Fall steuerbarer, wobei man die Qualität des Endproduktes leicht variieren kann, indem man dessen Kennwerte verbessert, und die Gefahrlosigkeit des Prozesses höher macht, was beim Übergang auf die industrielle Nutzbarmachung der Herstellung wichtig ist. Möglich ist die Anwendung der Legierungen Al-Zr, Si-Al, deren Verwendung einen analogen Effekt wie bei obenerwähnten Legierungen macht. Metalle können in Form von Pulvern und Abfällen der Aluminium-, Siliziumindustrie sowie von Schwämmen (Titan, Zirkonium) verwendet werden.

Als chromhaltige Komponente wird zweckmässigerweise in die exothermische Mischung einzeln oder im Gemisch genommene Chromit (Chromeisenerz), Cromoxid, Chromsulfat, Chromat eines von Erdalkalimetallen, das der Reihe: Kalzium, Barium, Magnesium gehört, eingeführt. Die chromhaltige Komponente wird hauptsächlich in Form von Pulvern mit einer Dispesität von 1-1000 μm und Granalien von 1-5 mm Grösse benutzt, dabei kann die Kornzusammensetzung sich sowohl im vorgeschlagenen Bereich als auch ausser ihm abhängig von der Art des Feuerfeststoffes ändern. So kann erfindungsgemäss zur Herstellung von Grosserzeugnissen die Dispersität des chromhaltigen Bestandteiles von 1 μm bis 5 mm, für Kleinerzeugnisse (Tiegel, Röhren) von 1 bis 500 μm variieren. Das vorgeschlagene Verfahren erfordert keine vorherige Fraktionierung der Pulver, dass heisst, nach der Zerkleinerung der Ausgangskomponenten und nach der Bestimmung der gesamten Kornzusammensetzung werden die Pulver zur Herstellung des Endproduktes geleitet. Es werden auch Abweichungen nach der Dispersität der verwendeten chromhaltigen Komponenten zugelassen, aber in diesem Fall soll der Gehalt an Fraktion von ≤ 1 μm 20 Ma.-% und der Fraktion von über 5 mm 30 Ma.-% nicht übersteigen, bezogen auf die Kornzusammensetzung der chromhaltigen Komponente. Chromverbindungen können in der Art von Schlämmen und Abfällen der entsprechenden Betriebe verwendet werden. Chromit (Chromeisenerz) benutzt man bei einem Gehalt an Chromoxid von mindestens 30 Ma.-%.

Ein Füllstoff der obengenannten Zusammensetzung, der in die exothermische Mischung in einer Menge von 0,1-50 Ma.-% eingeführt wird, gewährleistet eine Senkung der Temperatur des Brennvorganges, indem er eine lokale Abschmelzung der Komponenten der Mischung ausschliesst, was zur Erhaltung eines Feuerfeststoffes von hoher Qualität beiträgt. Die Ausnutzung der Schlammabfälle der Hochofenproduktion, eines Feuerfestbruches, der Abfälle der Graphit- und Siliziumproduction als Füllstoff ermöglicht es, den Herstellungsprozess billiger zu machen und die Vorräte der genannten Abfälle zu verwerten, was sich auf die ökologische Lage an Produktionsstellen günstig auswirken wird. Die Abweichung von dem Gehalt an Füllstoff in der Mischung von 0,1 bis 50 Ma.-% in den beiden Richtungen verringert die Effektivität des Brennvorganges, was zur Herabsetzung der Ausbeute und der Qualität des herzustellenden Feuerfeststoffes fuhrt. Es ist empfehlenswert, als Füllstoff mindestens ein genannten feuerfestes Oxid aus der Gruppe: $TiO_2$, $ZrO_2$, $MgO$, $CaO$, $Y_2O_3$, $SiO_2$, $Al_2O_3$ oder mindestens einen Salz der anorganischen Säure, der der Gruppe: Sulfat, Chlorid, Magnesium- oder Aluminiumnitrat, Natrium- oder Aluminiumphosphat, Natriumsilikat gehört, oder ein Gemisch aus mindestens zwei genannten Salzen anzuwenden. Der Füllstoff kann in Form von Pulver mit einer Dispersität von 1-1000 $\mu$m , Fasern, Fäden angewendet werden, wobei die Fasern und Fäden einen Durchmesser von $\leq$ 1 m bis 1 mm haben. Der Dispersionsgrad der benutzten Füllstoffe hängt von der Vorbestimmung der Feuerfeststoffe ab, übt einen Einfluss auf ihre Betriebskennwerte aus und verändert sich einem weiten Bereich von 1 $\mu$m bis 50 mm. Um aus den erfindungsgemässen Feuerfeststoffen porige Grossenzeugnisse, beispielsweise Platten, herzustellen, kann man grobdisperse Füllstoffe mit einer Grösse der Teilchen von bis 50 mm ausgenutzt werden, um diesen Tiegel, Hülsen herzustellen benutzt man Füllstoffe mit einer Dispersität von 1 bis 1000 $\mu$m Die Kornzusammensetzung des Füllstoffes in Form von Pulver mit einer Dispersität von 1-1000 $\mu$m is vorteihaft und kann sich in dieser oder jener Richtung ändern, aber die Menge der Fraktionan von unter 1 $\mu$m soll 10 Ma.-% und von über 1000 $\mu$m - 20 Ma.-% der Kornzusammensetzung der Komponenten des Füllstoffes nicht übersteigen. Bei Herstellung von Feuerfeststoff kann man ihm eine beliebige Form verleihen, d.h. daraus ein Erzeugnis zu erhalten. Man bereitet dazu aus exothermischer Mischung ein Halbzeug entweder durch Einschütten in eine Form oder durch Formung unter Anwendung von Wasserlösungen der Salze anorganischer Säuren, das heisst unter Benutzung wasserlöslicher Füllstoffe als Bindemittel. Die Verwendung der befeuchteten Mischungen ermöglicht es, einen Überzug auszutragen sowie ein Erzeugnis komplizierter Konfiguration zu erhalten. Wasser gibt man in einer Menge zu, die für die Erhaltung einer dünnflüssiger-Masse erforderlich ist. Nach der Formung exothermischer Mischung in der Form eines Erzeugnisses oder Überzuges wird das Wasser durch eine Vorwärmung (ein Trocknen) entfernt. Als Lösungsmittel können benutzt sein: Wasser, Alkohol, Wasser-Alkohol- und Wasser-Azeton-Lösungen. Die Anwärmung der verdichteten exothermischen Mischung vor der Wärmebehandlung auf eine Temperatur von 100-800°C ist für die Entferbung des Wassers und auch für die Erhöhung der Temperatur des Brennens von schwachexothermischen Mischungen erforderlich und ermöglicht somit die Erhaltung eines hochqualitativen Feuerfeststoffes. Der genannte Bereich hängt von der genutzten Zusammensetzung exothermischer Mischung ab und kann im Sinne des Temperaturanstiegs geändert werden. Das erfindungsgemässe Verfahren, das bei einer Flammenführung verwirklicht wird, zeichnet sich durch eine hohe Wirksamkeit infolge einer einfachen Technologie aus. Die Herstellung von Erzeugnissen aus dem Feuerfeststoff oder Überzügen kann an der Luft ohne Anwendung von Reaktoren und Öfen vor sich gehen, möglich ist eine parallele Verwirklichung von mehreren Synthesen, für seine Überführung in die Industrie sind keine zusätzlichen Betriebsflächen erforderlich. Das Verfahren kennzeichnet sich durch einen geringen Energieaufwand, eine hohe Leistung bei guter Qualität der herzustellenden chromhaltigen Feuerfeststoffe und Erzeugnisse. Es ermöglicht auch, hochqualitative Überzüge auf grösseren Oberflächen mit komplizierten Profilen zu erhalten. Die Anwendung der Abfälle von Hochofenvorgängen und anderer Prozesse als Füllstoff ermöglicht es, teilweise die Probleme deren Verwertung zu lösen und einige Fragen der Ökologie der entsprechenden Industriebetriebe zu erledigen.

Beste Ausführungsvariante der Erfindung

Man bereitet eine exothermische Mischung aus chromhaltiger Komponente - Chromoxid (VI) - in Form von Pulver mit einer Dispesität von bis 1 mm, einem Reduktionsmittel - Aluminium, das in Form von Spänen genommen ist, und einem Füllstoff ( feuerfestem Ton - in Form von Granalien mit einer Grösse von 1-5 mm bei folgenden Verhältnis der Komponenten (Ma.-%):

| | |
|---|---|
| Chromoxid (VI) | 55,1 |
| Aluminium | 14,9 |
| feuerfester Ton | 30,0. |

Aus der erhaltenen Mischung fertigt man Ziegelsteine mit Abmessungen von 250 x 120 x 65 mm durch Einschütten derselben in Formen und durch Initiierung des Brennens der Mischung an der Luft durch eine Impulsgabe des elektrischen Stromes auf eine metallene Wendel. Der Prozess der Wechselwirkung der Komponenten erfolgt durch die Wärme, die sich im Ergebnis der Brennreaktion entwickelt. Die Flammenfront verbreitet sich über die Halbzeuge während 10-15 Sekunden mit einer Geschwindigkeit von 1-5 cm/s. Gesinterte Ziegelsteine werden in den Formen bis zur Abkühmung gehalten.

Der Feuerfeststoff eines jeden Ziegelsteines hat eine Dichte von 2,5 g/cm³, eine Porigkeit von 35%, eine Druckfestigkeit von 21,0 MPa, eine Feuerfestigkeit von 1650° C. Die Ausbeute an brauchbaren Fertigziegelsteinen beträgt 98%.

Beispiel 1

Man bereitet eine exothermische Mischung, die zu 50 Ma.-% aus Magnesiumchromatpulver mit einer Dispersität von 1-100 μm , zu 20 Ma.-% aus Aluminium-Magnesium-Legierung-Pulver (AlMg) mit einer Dispersität von 200 μm und zu 30 Ma.-% aus Magnesiumoxidpulver mit einer Dispersität von 1-50 μm besteht.

Zur Formierung eines Halbzeuges in der Form eines Tiegels schüttet man die erhaltene Mischung in einen Hohlraum ein, der durch die Wandungen und Böden zweier koaxial angeordneter Pappenbüchsen gebildet ist, die in der Form untergebracht sind, die mit Sand gefüllt wird. Die Brennreaktion wird durch eine elektrische Wendel initiiert. Nach der Fortpflanzung der Flammenfront über das Halbzeug wird der gesinterte Tiegel im Sand auf die Raumtemperatur abgekühlt und dann aus dem Formsand herausgehoben.

Der erhaltene Tiegel kann für die Schmelzung von Metallen (Cu, Ag) und auch für die Arbeit mit aggressiven Medien bei erhöhten Temperaturen angewandt. Der Feuerfeststoff der Tiegel hat eine Dichte von 3,21 g/cm³, eine Porigkeit von 30,1% eine Druckfestigkeit von 26,0 MPa, eine Feuerfestigkeit von 1960° C.

Beispiel 2

Man bereitet eine exothermische Mischung zu 75,3 Ma.-% aus feingemahlenem Chromit, zu 20,5 Ma.-% aus Aluminiumpulver mit einer Dispersität von 1-100 μm und zu 4,2 Ma.-% aus wässriger Lösung von Magnesiumsulfat. Aus der erhaltenen feuchten Masse formt man ein Halbzeug in der Art eines Tiegels mit den Abmessungen: Durchmesser 500 mm, Höhe 800 mm, Wanddicke 45 mm. Zu diesem Zweck wird die Mischung in einen Hohlraum untergebracht, der durch Wandung und Boden je zweier koaxial angeordneter Büchsen gebildet ist, die aus Gewebestoff oder porösem Papier auf einer Karkasse aus metallischem Netz ausgeführt sind. Die Büchsen werden in eine mit Samd gefüllte Form eingestampft. Das Halbzeug wird bei einer Temperatur von 450° C während 10 Stunden getrochnet, und man initiiert ein Brennen von der Schweisselektrode . Nach einer Abkühlung ist der Tiegel betriebsvereit. Der Feuerfeststoff des Tiegels hat eine Druckfestigkeit von 60 MPa, Feuerfestigkeit von 1800° C.

Beispiel 3

Man bereitet eine exothermische Mischung zu 78,5 Ma.-% aus Magnesiumchromatpulver mit einer Dispersität von 1-500 μm , zu 16,4 Ma. -% aus Aluminiumpulver mit einer Dispersität von 1-300 μm und zu 0,1 Ma.-% aus Aluminiumoxidpulver mit einer Dispersität von 1-400 μm mit anschliessender Zugabe von 5 Ma.-% Natriumhexametaphosphat in Form wässriger Alkohol-Lösung , die in einer Menge von 35% der Mischungsmasse genommen wird. Die erhaltene befeuchtete Masse wird auf die Oberfläche eines Magnesitchromsteines in einer Schicht von 20 mm aufgetragen, man trocknet bei einer Temperatur von 400° C und initiiert das Brennen. Die Dichte der Adhäsion des Überzuges mit der Unterlage beträgt 35 MPa, sein Material hat eine Druckfestigkeit von 36 MPa, Feuerfestigkeit von 1880° C.

Beispiel 4

Man bereitet eine exothermische Mischung zu 75,3 Ma.-% aus feingemahlenem Chromit mit einer Dispersität von 0,5 mm, zu 20,5 Ma.-% aus Aluminium mit einer Dispersität von 0,3 mm und zu 4,2 Ma.-% aus wässriger Magnesiumsulfat-Lösung. Die erhaltene befeuchtete Masse wird in eine Durchbrandlïcke mit Abmessungen von 500 x 500 x 150 mm im Futterüberzug eines Brennofens aufgebracht, getrocknet, auf eine Temperatur von 350° C erhitzt, wobei ein Brennen initiiert wird. Nach der Beendigung des Brennens ist die Durchbrandstelle wiederhergestellt. Der an der Durchbrandstelle gebildete Feuerfeststoff kennzeichnet sich durch eine Porigkeit von 57%, Druckfestigkeit von 58,8 MPa, Feuerfestigkeit von 1790° C.

Beispiel 5

Man bereitet eine exothermische Mischung zu 77,8 Ma.-% aus feingemahlenem Chromit mit einer Dispersität von 1-1000 μm, zu 16,1 Ma.-% aus Aluminiumspan und zu 6,1 Ma.-% aus wässriger Aluminiumsulfat-Lösung. Die erhaltene Masse torkretiert man mit einer Zement-Kanone auf die Schamottenoberfläche in einer Schicht von 110 mm Dicke in der Sinterungszone (Schamottenschicht 120 mm), von 70 mm Dicke in der Kühlungszone (Schamottenschicht 230 mm).

Nach der Erhärtung der Masse an der Luft wird der Ofen angeheizt, wobei die Brennerdüsen bei minimaler Flammenführung arbeiten, man führt ein Trocknen bei einer Temperatur von mindestens 500° C (Überwachung der Durchwärmungsfelder - von den Thermopaaren). Das Initiieren der Brennung erfolgt durch die Überführung der Arbeit der Düsen auf eine normale Arbeitsweise, dabei kann man den Entzündungsmoment wie auch den Verbrennungsmoment sowohl visuell als auch nach den Anzeigen der Thermopaare ermitteln. Vom Augenblick der Einstellung stationärer Temperaturfelder in der Überzugsschicht an kann man in den Ofen einen Rohstoff für das Brennen bringen. Das Material des erhaltenen Überzuges hat folgende Charakteristiken: Feuerfestigkeit 1800° C, Druckfestigkeit 65 MPa, Porigkeit 35%.

Nachstehen in der Tabelle sind andere Beispiele (6-31) der Herstellung von Erzeugnissen und Überzügen aus chromhaltigem Feuerfeststoff, erfindungsgemäss , unter Bezugnahme auf die Zusammensetzung der exothermischen Mischung, Vorgangsverhältnisse, Typengrösse der Erzeugnisse, Physikalisch-mechanische Kennwerte des Materials des Erzeugnisses angeführt.

Tabelle

| Lfd. Nr. | Zusammensetzung der exothermischen Mischung, Ma.-% | | |
| --- | --- | --- | --- |
| | Chromhaltige Komponente | Reduktions-mittel | Fullstoff |
| 1 | 2 | 3 | 4 |
| 6 | $CrO_3 + Cr_2(SO_4)_3$ 54,8 | Al 18,7 | $Al_2O_3$ 26,5 |
| 7 | $CrO_3$ 49,5 | Si 10,5 | $SiO_2$ 40,0 |
| 8 | $CrO_3 + Cr_2O_3$ 53,5 | Al+Mg 7,4+9,1 | Abfälle der Hochofenpro-duktion 30,0 |

Fortsetzung der Tabelle

| 1 | 2 | 3 | 4 |
|---|---|---|---|
| 9 | $CrO_3$ 42,0 | Al 8,0 | feuerfester Bruch 50,0 |
| 10 | $BaCrO_4$ 91,9 | Al 8,0 | $Al_2O_3$+ Sand 0,1 |
| 11 | $CrO_3$+$CaCrO_4$ 61,9 | Al 13,1 | CaO 25,0 |
| 12 | $MgCrO_4$ 50,0 | Al+Mg 20,0 | MgO 30,0 |
| 13 | $MgCrO_4$ 71,0 | $Al_3Mg_2$ 14,0 | $ZrO_2$ 15,0 |
| 14 | $CaCrO_4$ 66,6 | $Al_3Mg_4$ 13,4 | $Al_2O_3$+MgO 10,0+10,0 |
| 15 | $MgCrO_4$ 72,5 | Zr 12,5 | $Y_2O_3$ 15,0 |
| 16 | $CrO_3$ 50,0 | Ti+Al 25,0 | $TiO_2$ (Fäden) 25,0 |
| 17 | $CrO_3$ 50,0 | TiAl 25,0 | $TiO_2$ 25,0 |
| 18 | $MgCrO_4$ 67,5 | Mg 17,5 | MgO (Granalien) 15,0 |
| 19 | $CrO_3$ 51,5 | Ti+$SiO_2$ 18,5 | Abfälle der Draphitproduktion 15,0+15,0 |
| 20 | $CrO_3$ 51,5 | Ti+Si 8,0+10,5 | $SiO_2$+Abfälle der Graphitproduktion 15,0+15,0 |
| 21 | $CrO_3$ 49,5 | Si 10,5 | $SiO_2$+ Abfälle der Produktion von Siliziumkarbid 20,0+20,0 |
| 22 | Chromit 76,4 | Al 15,8 | $MgSO_4$+$Mg(NO_3)_2$ 3,9+3,9 |
| 23 | Chromit 78,7 | Al+Mg 10,5+2,9 | $MgCl_2$ 7,9 |
| 24 | Chromit 76,4 | Al 15,8 | $NaH_2PO_4$ 7,8 |
| 25 | Chromit 62,0 | Al 13,0 | $Na_2SiO_3$ 25,0 |

Fortsetzung der Tabelle

| 1 | 2 | | 3 | | 4 |
|---|---|---|---|---|---|
| 26 | Chromit | 69,6 | Al | 15,2 | $Al_2(SO_4)_3$+Abfälle der Hochofenproduktion 3,2+10,0 |
| 27 | $CaCrO_4$ | 78,0 | Al | 13,0 | $MgSO_4$+$Al_2O_3$ 2,6+6,4 |
| 28 | $CaCrO_4$ | 71,0 | $Al_2Mg_3$ | 14,5 | $Na_2HPO_4$+$Al_2O_3$ 7,9+6,6 |
| 29 | Chromit | 70,0 | Al | 21,0 | $MgSO_4$+MgO 2,0+7,0 |
| 30 | Chromit | 75,3 | Al+Mg 9,6+10,9 | | $MgSO_4 \cdot 7H_2O$ 4,2 |
| 31 | $MgCrO_4$ | 67,1 | Al | 12,9 | $Mg(NO_3)_2$+CaO 15,0+15,0 |

Fortsetzung der Tabelle

| Lfd. Nr. | Temperatur der Anwärmung, °C | Typengrösse des Erzeugnisses, mm | Physikalisch-mechanische Kennwerte des Materials des Erzeugnisses | | | Ausbeute an brauchbarem Endprodukt |
|---|---|---|---|---|---|---|
| | | | Porigkeit % | Druckfestigkeit, MPa | Feuerfestigkeit, °C | |
| 1 | 5 | 6 | 7 | 8 | 9 | 10 |
| 6 | — | Ziegelstein 250x120x65 | 30,0 | 22.0 | I750 | 96 |
| 7 | | – " – | 35,0 | I5,0 | I700 | 96 |
| 8 | | Platte 500x400x80 | 32,0 | 20,0 | I700 | 98 |
| 9 | 200 | – " – | 35,0 | I7,5 | I750 | 95 |

Fortsetzung der Tabelle

| I | 5 | 6 | 7 | 8 | 9 | IO |
|---|---|---|---|---|---|---|
| 10 | | Ziegelstein 250x125x60 | 22,0 | 29,0 | I750 | 95 |
| 11 | | – " – | I4,7 | 60,4 | I930 | 98 |
| 12 | 150 | Tiegel | 36,5 | 20,0 | I900 | 80 |
| 13 | | Ziegelstein | 25,0 | 23,5 | I850 | 98 |
| 14 | | – " – | I8,0 | 29,0 | I850 | 98 |
| 15 | | – " – | I8,0 | 54,0 | 2000 | 98 |
| 16 | | – " – | 2I,0 | 62,0 | I800 | 97 |
| 17 | | Ziegelstein 125x120x60 | 25 | 55 | I780 | 97 |
| 18 | | Ziegelstein 250x120x65 | 22,3 | 34,0 | 2000 | 98 |
| 19 | | Ziegelstein 125x120x60 | 40 | 32 | I750 | 98 |
| 20 | | – " – | 36 | 34 | I700 | 98 |
| 21 | | – " – | 35 | 28 | I800 | 96 |
| 22 | 400 | Ziegelstein 250x125x60 | 50 | 60,0 | I800 | 97 |
| 23 | 600 | Rohr ⌀40 Wanddicke 10 mm | 45 | 56,0 | I800 | 95 |
| 24 | 300 | Block mit Abm. 600x40x40 | 55 | 64,0 | I800 | 96 |
| 25 | 550 | Tiegel ⌀500 H=800 | 35 | 60,0 | I800 | 95 |
| 26 | 800 | Rinne | 48 | 62,0 | I800 | IO0 |
| 27 | 200 | Ziegelstein | I8,0 | 3I,0 | I900 | 98 |
| 28 | 300 | Überzug | I8,2 | 32,2 | I380 | IO0 |
| 29 | 700 | – Überzug | 56 | 62,0 | I800 | IO0 |
| 30 | 200 | Überzug | 45 | 70,0 | I820 | IO0 |
| 31 | 100 | Überzug auf einem feuerfesten Ziegelstein | I6,0 | 3I,2 | I950 | IO0 |

Gewerbliche Verwertbarkeit

Der Stoff, der durch das erfindungsgemässe Verfahren hergestellt ist, wird bei der Produktion von Tiegeln, Ziegelsteinen, Rohren, Platten und bei der Aufbringung von Schutzüberzügen auf die Arbeitsfläche von Baugruppen und Konvertern der Hoch- und Siemens-Martin-Öfen sowie bei der Ausfütterung von metallurgischen Hochtemperaturaggregaten, Einsatz- und Koksöfen Anwendung findem.

**Patentansprüche**

1. Verfahren zur Herstellung eines chromhaltigen Feuerfeststoffes, das die Bereitung einer Mischung aus einer chromhaltigen Komponente und einem Füllstoff und deren Wärmebehandlung vorsieht, dadurch **gekennzeichnet**, dass man als Füllstoff, der in einer Menge von 0,1-50 Ma.-% eingeführt wird, einzeln oder im Gemisch genommene Periklas, Sand, Ton, feuerfestes Oxid, feuerfesten Bruch, Abfälle der Hochofenproduktion, Abfälle der Graphitproduktion, Abfälle der Siliziumkarbidproduktion, Salz anorganischer Säure anwendet und in die genante Mischung noch 8-20 Ma.-% Reduktionsmittel einführt, als welches man mindestens ein Metall der Gruppe: Aluminium, Magnesium, Silizium, Zirkonium, Titan oder deren Legierungen benutzt, die erhaltene exothermische Mischung einer Wärmebehandlung bei Flammenführung unterwirft.

2. Verfahren nach Anspruch 1, dadurch **gekennzeichnet**, dass als Reduktionsmittel hauptsächlich ein Gemisch aus mindestens zwei genannten Metallen, die im Äquiatomverhältnis stehen, verwendet wird.

3. Verfahren nach Anspruch 1, dadurch **gekennzeichnet**, dass man als die genannte Legierung eine Aluminiumlegierung der Reihe: $Al_3Mg_2$, $Al_3Mg_4$, AlMg, $Al_2Mg$, TiAl benutzt.

4. Verfahren nach Anspruch 1, dadurch **gekennzeichnet**, dass man als chromhaltige Komponente einzeln oder im Gemisch genommene Chromit, Chromoxid, Chromsulfat, Chromat eines der Erdalkalimetalle der Reihe: Kalzium, Barium, Magnesium verwendet.

5. Verfahren nach Anspruch 4, dadurch **gekennzeichnet**, dass man als chromhaltige Komponente ein Gemisch aus zwei genannten Verbindungen verwendet.

6. Verfahren nach Anspruch 1, dadurch **gekennzeichnet**, dass man als genanntes feuerfestes Oxid mindestens ein Oxid der Gruppe: $TiO_2$, $ZrO_2$, MgO, CaO, $Y_2O_5$, $SiO_2$, $Al_2O_3$ verwendet.

7. Verfahren nach Anspruch 1, dadurch **gekennzeichnet**, dass man als genannten Salz anorganischer Säure mindestens einen Salz der Gruppe: Sulfat, Chlorid, Magnesium- oder Aluminiumnitrat, Natrium- oder Aluminiumphosphat, Natriumsilikat verwendet.

8. Verfahren nach Anspruch 7, dadurch **gekennzeichnet**, dass man ein Gemisch aus mindestens zwei genannten Salzen verwendet.

9. Verfahren nach Anspruch 1, dadurch **gekennzeichnet**, dass man aus der exothermischen Mischung ein Halbzeug formt und es einer Wärmebehandlung bei Flammenführung bis zur Erhaltung eines Erzeugnisses aus dem genannten chromhaltigen Feuerfeststoff unterwirft.

10. Verfahren nach Anspruch 1, dadurch **gekennzeichnet**, dass man das genannte Halbzeug vor der Wärmebehandlung auf eine Temperatur, von 100-800 °C vorwärmt.

11. Verfahren nach Anspruch 1, dadurch, **gekennzeichnet**, dass man den Füllstoff in Form von Pulver mit einer Dispersität von 1-1000 $\mu$m , von Granalien, Fasern, Fäden benutzt.

12. Verfahren nach Anspruch 4, dadurch **gekennzeichnet**, dass man die chromhaltige Komponente in Form von Pulver mit einer Dispersität von 1-1000 $\mu$m und von Granalien von 1-5 mm Grösse verwendet.

13. Chromhaltiger Feuerfeststoff, der durch ein Verfahren, das nach den Ansprüchen 1 bis 12, angemeldet wird, hergestellt ist.

# INTERNATIONAL SEARCH REPORT

**I. CLASSIFICATION OF SUBJECT MATTER** (if several classification symbols apply, indicate all)

According to International Patent Classification (IPC) or to both National Classification and IPC

IPC 5     C04B 35/20, 35/12

**II. FIELDS SEARCHED**

| Minimum Documentation Searched | |
|---|---|
| Classification System | Classification Symbols |
| IPC 5 | C04B 35/10, 35/12, 35/20, 35/42 |

| Documentation Searched other than Minimum Documentation to the Extent that such Documents are Included in the Fields Searched |
|---|
| |

**III. DOCUMENTS CONSIDERED TO BE RELEVANT**

| Category | Citation of Document, with indication, where appropriate, of the relevant passages | Relevant to Claim No. |
|---|---|---|
| A | US, A, 3542530 (UNITED AIRCRAFT CORPORATION) 24 November 1970 (24.11.70); see the claims | 1-12 |
| A | SU, AI,1178736 (GOSUDARSTVENNY VSESOJUZNY NAUCHNO-ISSLEDOVATELSKY INSTITUT TSEMENTNOI PROMYSHLENNOSTI) 15 September 1985 (15.09.85); see the claims; column 1, lines 13-19; column 2, lines 1-15 | 1-12 |
| A | SU, AI,1379286 (BELORUSSKY TEKHNOLOGICHESKY INSTITUT) 7 March 1988 (07.03.88); see the claims; column 1, line 20; table 2 | 1-12 |
| A | SU, AI,1058940 (GOSUDARSTVENNY VSESOJUZNY NAUCHNO-ISSLEDOVATELSKY INSTITUT TSEMENTNOI PROMYSHLENNOSTI) 7 December 1983 (07.12.83);see the claims column 6, lines 4-6 | 1-12 |

.../...

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 25 July 1989 (25.07.89 ) | 20 December 1989 (20.09.89) |
| International Searching Authority<br><br>ISA/SU | Signature of Authorized Officer |

Form PCT/ISA/210 (second sheet) (January 1985)

**III. DOCUMENTS CONSIDERED TO BE RELEVANT (CONTINUED FROM THE SECOND SHEET)**

| Category* | Citation of Document, with indication, where appropriate, of the relevant passages | Relevant to Claim No |
|---|---|---|
| A | SU, AI, 1294793 (VOSTOCHNY NAUCHNO-ISSLEDOVATELSKY I PROEKTNY INSTITUT OGNEUPORNOI PROMYSHLENNOSTI) 7 March 1987 (07.03.87); see the claims; column 1, line 26; table 2 | 1-12 |
| | --- | |
| A | SU, AI, 442175 (UKRAINSKY NAUCHNO-ISSLEDOVATELSKY INSTITUT OGNEUPOROV) 19 November 1974 (19.11.74) see the claims | 1-12 |
| | ------------------ | |